# EUROPEAN PATENT APPLICATION

(11) **EP 1 554 959 A1**
(43) Date of publication of application: **20.07.2005**
(21) Application number: 05250142.6
(22) Date of filing: 13.01.2005
(51) Int. Cl.: A47J 37/06

(54) **Boat-shaped waffles and cooking assembly**

(30) Priority: 15.01.2004 US 536969 P
(71) Applicant: Tilia International, Inc., San Francisco, California 94107 (US)
(72) Inventor: Albritton, Charles Wade, Hercules, CA 94547 (US); Small, Steven, Novato, CA 94947 (US); Patterson, Jesse Frost, Pacifica, CA 94044 (US)
(74) Representative: Merrifield, Sarah Elizabeth

(57) **Abstract**

A method and apparatus (100) for making boat-shaped waffles is described. The shape of the waffles is such that it is useful for holding waffle fillings and toppings including but not limited to ice-cream, whipped cream, fruit, chocolate, assorted confection and any combination thereof.

## Description

### FIELD OF THE INVENTION

The present invention generally relates to food preparation technology. More particularly, the invention is directed to making boat-shaped waffles. The shape of the waffles is useful for holding waffle fillings and toppings including but not limited to ice-cream, whipped cream, fruit, chocolate, assorted confection and any combination thereof.

### DESCRIPTION OF THE DRAWINGS

The present invention is illustrated by way of example, and not by way of limitation.
FIG. 1 is a line drawing illustrating an isometric view of a cooking assembly 100 for making boat-shaped waffles, according to certain embodiments;
FIG. 2 is similar to FIG. 1 except that FIG. 2 further illustrates a pair of boat-shaped waffles cooked in the cooking assembly, according to certain embodiments;
FIG. 3 is similar to FIG. 2 except that FIG. 3 further illustrates a pair of boat-shaped waffles that are lifted out of lower plate 104, according to certain embodiments;
FIG. 4 is an enlarged isometric view of one or the boat-shaped cavities on the bottom plate of the cooking assembly, according to certain embodiments;
FIG. 5A is a top plan view of the cooking assembly 500, according to certain other embodiments;
FIG. 5B is a cross-sectional view of the cooking assembly taken in the direction D-D as shown in FIG. 5A, according to certain embodiments;
FIG. 6A is a line drawing isometric view that illustrates a boat-shaped waffle 600, according to certain embodiments;
FIG. 6B is an isometric view that illustrates the flip-side of the boat-shaped waffle of FIG. 6A, according to certain embodiments;
FIG. 7 is a photographic isometric view that illustrates the boat-shaped waffle of FIG. 6A, according to certain embodiments;
FIG. 8A is a bottom plan view of the boat-shaped waffle 800, according to certain embodiments; and
FIG. 8B is a cross-sectional view of the boat-shaped waffle taken in the direction B-B as shown in FIG. 8A, according to certain embodiments.

### DETAILED DESCRIPTION OF THE PREFERRED EMBODIMENT

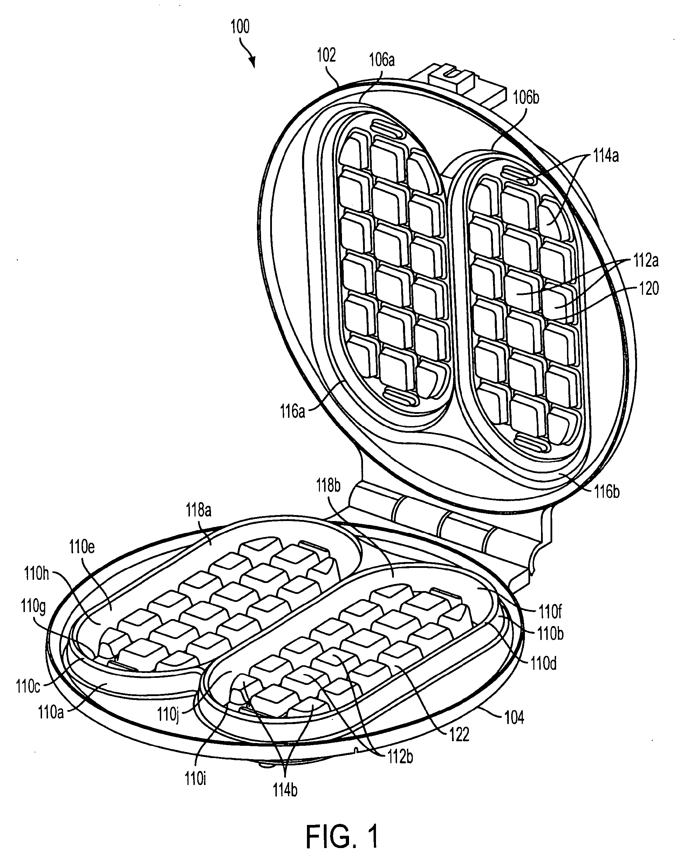

FIG. 1 is a line drawing illustrating an isometric view of a cooking assembly 100 for making boat-shaped waffles, according to certain embodiments.

FIG. 1 shows cooking assembly 100 in an open position. In a non-limiting example, cooking assembly 100 is adapted for making two boat-shaped waffles. The embodiments are not restricted to cooking assemblies that are adapted for making two boat-shaped waffles. The number and size of the boat-shaped waffles that can be made by the cooking assembly may vary from implementation to implementation.

Cooking assembly 100 includes an upper plate 102 and a lower plate 104. Upper plate 102 is receivable on lower plate 104 or vice versa when cooking assembly 100 is in a closed position.

Upper plate 102 includes boat-shaped cavities 106a and 106b, according to certain embodiments. Similarly, lower plate 104 includes boat-shaped cavities 118a and 118b. Cavities 106a, 106b, 118a, and 118b each have a boat-shaped perimeter.

Cavities 106a and 106b include, within them, a plurality of protuberances, such as protuberances 112a, and 114a. Similarly, cavities 118a and 118b include, within them, a plurality of protuberances, such as protuberances 112b, and 114b. Protuberances such as 112a and 112b are approximately pyramidal in shape with a flat surface at the top. To explain the pyramidal shape, imagine a three-dimensional pyramidal form with its apex cut off to result in a flat top surface.

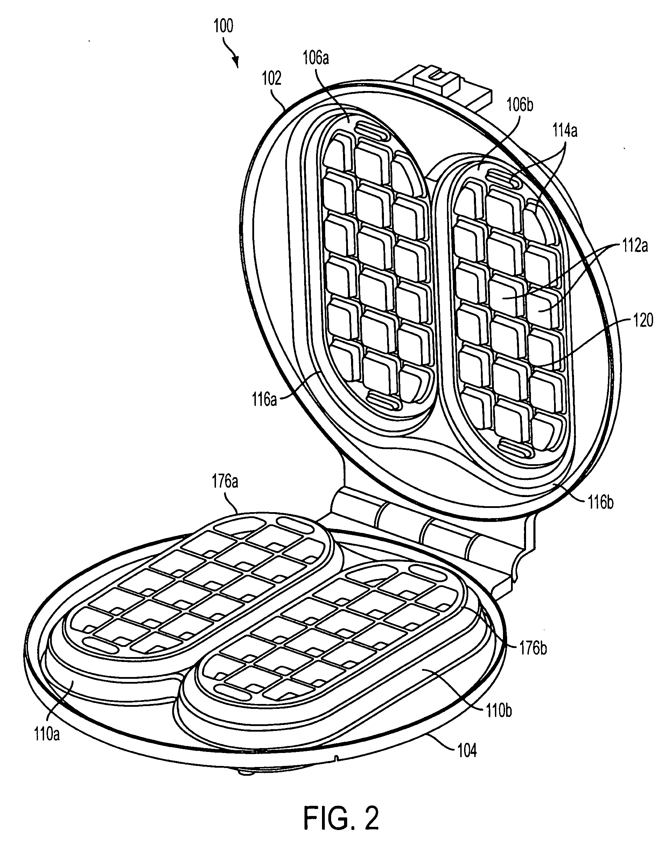

Protuberances such as 114a and 114b are partial pyramidal shapes that are truncated in order to fit within the boat-shaped perimeter of each of the cavities 106a, 106b, 118a, and 118b. Further, the protuberances in the cavities are surrounded by channels such as channels 120 and 122. Protuberances are described in greater detail herein with reference to FIG. 2.

Cavity 118a is surrounded by a raised wall 110a. Raised wall 110a is such that a top edge 110c of raised wall 110a is higher than the top surfaces of the protuberances within cavity 118a. The inner surface 110e of raised wall 110a is sloped at an angle such that an imaginary line 110h running from top edge 110c to a bottom edge 110g makes a small angle with an imaginary plane that is perpendicular to the horizontal plane of lower plate 104. The small angle is such that when a waffle is cooked in cavity 118a, the cooked waffle can be easily detached from cavity 118a in order to preserve the general structural integrity of the cooked waffle.

In other words, the bottom edge 110g has a perimeter that is smaller than the perimeter of top edge 110c. The bottom edge 110g will shape the bottom perimeter of a waffle that is cooked in cooking assembly 100. Similarly, top edge 110c will shape the top perimeter of the waffle. Thus, the cooked waffle will have a bottom perimeter that is smaller than the top perimeter and can be easily detached from cavity 118a in order to preserve its general structural integrity.

Similarly, cavity 118b is surrounded by a raised wall 110b. Raised wall 110b is such that a top edge 110d of raised wall 110a is higher than the top surfaces of the protuberances within cavity 118b. The inner surface 110f of raised wall 110b is sloped at an angle such that an imaginary line 110j running from top edge 110d to a bottom edge 110i makes a small angle with an imaginary plane that is perpendicular to the horizontal plane of lower plate 104. The small angle is such that when a waffle is cooked in cavity 118b, the cooked waffle can be easily detached from cavity 118b in order to preserve the general structural integrity of the cooked waffle.

The height of raised walls 110a and 110b is such that a waffle that is cooked in cooking assembly 100 achieves a boat-shape with raised walls of sufficient height for containing fruit, ice-cream, and/or other waffle fillings.

Cavity 106a includes a ledge 116a along its inner perimeter. Similarly, cavity 106a includes a ledge 116b along its inner perimeter. The top edge of raised wall 110a is receivable on ledge 116a when cooking assembly 100 is in a closed position. The top edge of raised wall 110b is receivable on ledge 116b when cooking assembly 100 is in a closed position.

According to certain other embodiments, both upper plate 102 and lower plate 104 may include only one cavity each rather than twin cavities for cooking waffles. According to other embodiments, both upper plate 102 and lower plate 104 may include a plurality of cavities for cooking waffles.

To make boat-shaped waffles, the cavities of the lower plate of the cooking assembly are filled with a suitable waffle batter. The cooking assembly is then closed by overlying and aligning the upper plate over the lower plate. The cooking assembly includes suitable heating and cooking mechanisms for cooking the waffles. According to certain embodiments, the cooking assembly automatically shuts off its cooking mechanism when the waffles are completely cooked. In certain other embodiments, the cooking assembly does not include heating or cooking mechanisms. In such embodiments, heat is applied to the cooking assembly in order to cook the waffles. In certain embodiments, the cooking assembly is adapted for baking boat-shaped waffles. In other embodiments, the cooking assembly is adapted for cooking boat-shaped waffles by steaming.

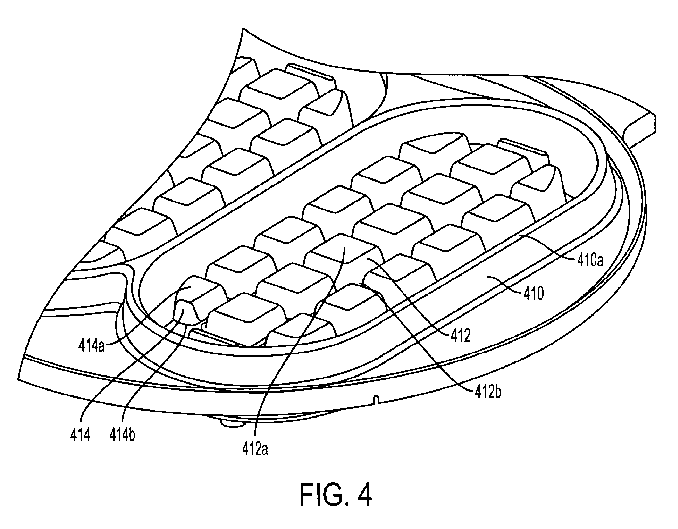

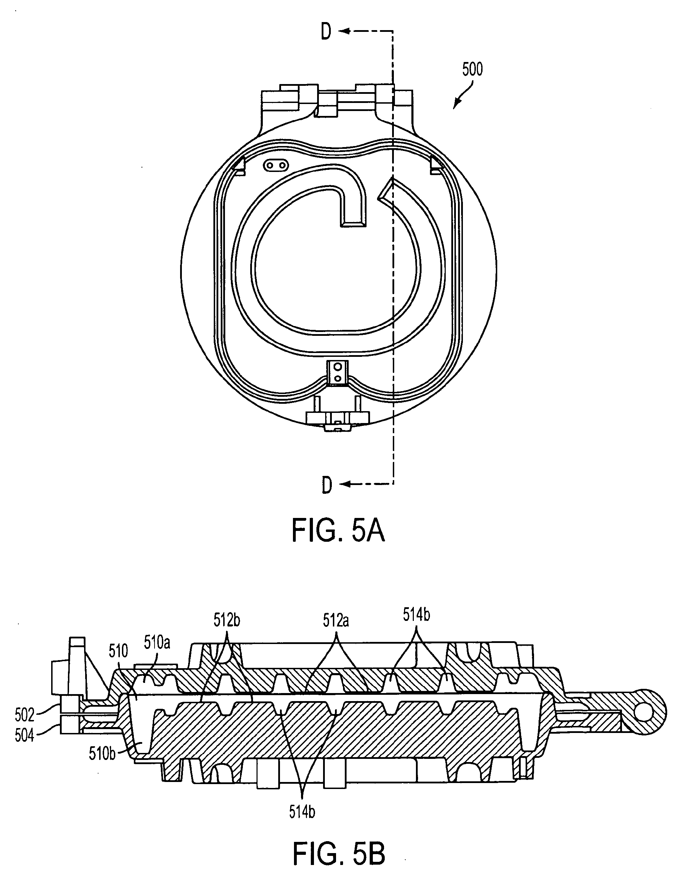

FIG. 2 is similar to FIG. 1 except that FIG. 2 further illustrates a pair of boat-shaped waffles cooked in the cooking assembly, according to certain embodiments. The boat-shaped waffles appear as 176a and 176b in the cooking assembly 100. The surfaces of boat-shaped waffles 176a and 176b extend above the top edges of raised walls 110a and 110b respectively. Boat-shaped waffles are described in greater detail herein with reference to FIGs. 4A, 4B, 4C, 5A, and 5B.

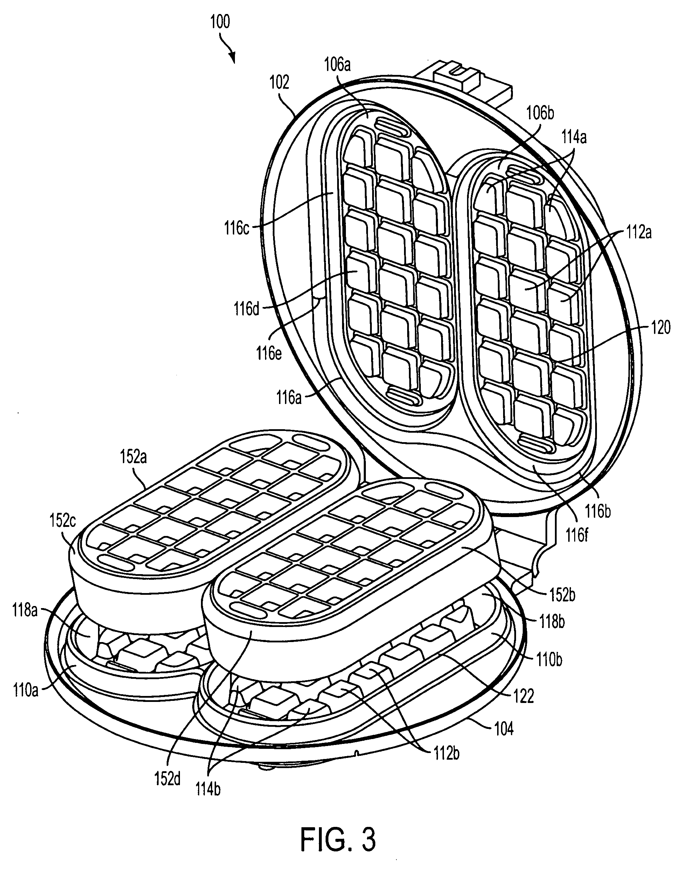

FIG. 3 is similar to FIG. 2 except that FIG. 3 further illustrates a pair of boat-shaped waffles that are lifted out of lower plate 104, according to certain embodiments. Such boat-shaped waffles are shown as waffles 152a and 152b. FIG. 3 also illustrates an inner perimeter surface 116c of cavity 106a, wherein inner perimeter surface 116c is sloped at an angle such that an imaginary line 116e running from ledge 116a to a bottom edge 116d makes a small angle with an imaginary plane that is perpendicular to the horizontal plane of upper plate 102. The inner perimeter surface 116f of cavity 106b is similarly sloped. Thus, the sloped inner perimeter surface 116c and 116f cause the cooked waffles 152a and 152b to have sloped edges, such as sloped edges 152c and 152d, respectively, as shown in FIG. 3. Such sloped edges allow the cooked waffles to be easily detached from the cavities 106a and 106b.

FIG. 4 is an enlarged isometric view of one or the boat-shaped cavities on the bottom plate of the cooking assembly, according to certain embodiments. FIG. 4 illustrates that the pyramidal protuberances in the boat-shaped cavity have flat surfaces at the top. Moreover, the top flat surface of a given pyramidal protuberance has a smaller area than the base of the pyramidal protuberance. For example, in FIG. 4 protuberance 412 has a substantially flat top surface 412a. Substantially flat top surface 412a has a smaller area than base 412b of protuberance 412.

FIG. 4 further illustrates a truncated pyramidal protuberance such as protuberance 414. Protuberance 414 has a substantially flat top surface 412a. Substantially flat top surface 414a has a smaller area than base 414b of protuberance 412. FIG. 4 also shows raised wall 410. The top edge 410a of raised wall 410 is higher than the top surfaces of the protuberances that are in the boat-shaped cavity.

The smaller area on the top surface relative to the base of a given protuberance allows for the cooked waffle to be easily detached from the protuberances. The height of raised wall 410 is such that a waffle that is cooked in the boat-shaped cavity as shown in FIG. 4 achieves a boat-shape with raised walls of sufficient height for containing fruit, ice-cream, and/or other waffle fillings.

FIG. 5A is a top plan view of the cooking assembly 500, according to certain other embodiments. FIG. 5A illustrates section line D-D for viewing a cross section of cooking assembly 500.

FIG. 5B is a cross-sectional view of the cooking assembly taken in the direction D-D as shown in FIG. 5A, according to certain embodiments. FIG. 5B shows the cooking assembly in a closed position. FIG. 5B shows an upper plate 502, a lower plate 504, a cavity 510a in upper plate 502, and a cavity 510b in lower plate 504. Further, FIG. 5B shows a plurality of protuberances in the cavity of upper plate 502, such as protuberances 512a. The plurality of protuberances 512a are surrounded by channels such as channels 514a. FIG. 5B shows a plurality of protuberances in the cavity of lower plate 504, such as protuberances 512b. The plurality of protuberances 512b are surrounded by channels such as channels 514b.

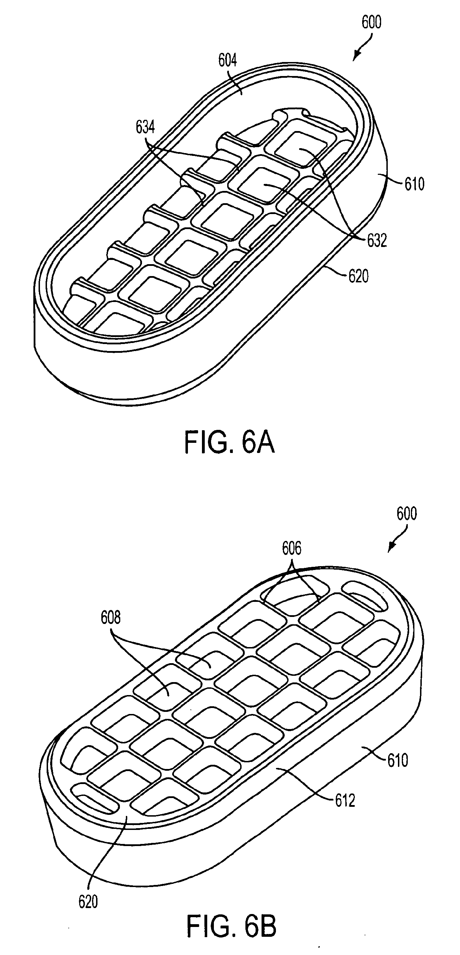

FIG. 6A is a line drawing isometric view that illustrates a boat-shaped waffle 600, according to certain embodiments. Boat-shaped waffle 600 includes a raised wall 610, a plurality of pyramid-shaped (pyramidal) wells, such as pyramid-shaped wells 632, and a base 620. Pyramid-shaped wells 632 are separated by ridges, such as ridges 634. The base of pyramid-shaped wells 632 have a smaller area that the area of the top opening of the well. Raised wall 610 in combination with base 620 form a cavity 604. Cavity 604 is suitable for holding ice-cream, or fruit, and/or other suitable waffle fillings.

FIG. 6B is an isometric view that illustrates the flip-side of the boat-shaped waffle of FIG. 6A, according to certain embodiments. FIG. 6B shows that the flip-side of boat-shaped waffle 600 includes a plurality of pyramid-shaped wells, such as pyramid-shaped wells 608, on base 620. Pyramid-shaped wells 608 are separated by ridges, such as ridges 606. The base of pyramid-shaped wells 608 have a smaller area that the area of the top opening of the well. FIG. 6B further shows that boat-shaped waffle 600 has a sloped edge 612.

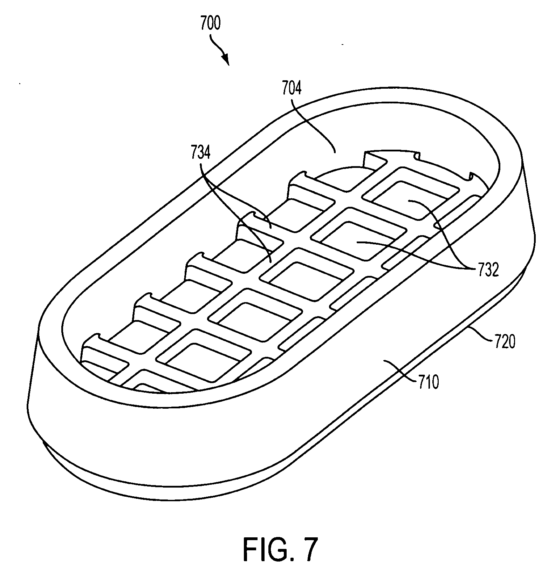

FIG. 7 is a photographic isometric view that illustrates the boat-shaped waffle of FIG. 6A, according to certain embodiments. Boat-shaped waffle 700 includes a raised wall 610, a plurality of pyramid-shaped (pyramidal) wells, such as pyramid-shaped wells 732, and a base 720. Pyramid-shaped wells 732 are separated by ridges, such as ridges 734. The base of pyramid-shaped wells 732 have a smaller area that the area of the top opening of the well. Raised wall 710 in combination with base 720 form a cavity 704. Cavity 604 is suitable for holding suitable waffle fillings and toppings.

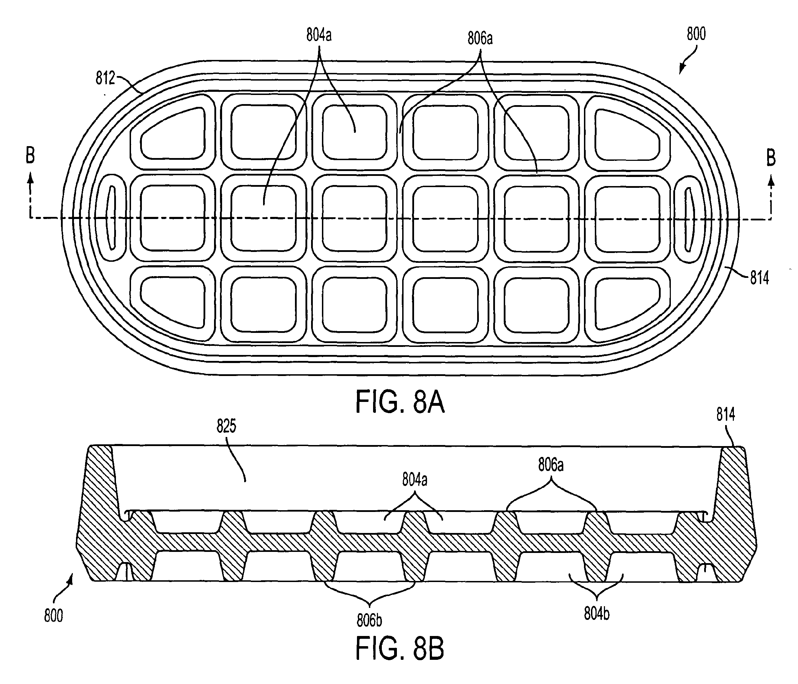

FIG. 8A is a bottom plan view of the boat-shaped waffle 800, according to certain embodiments. FIG. 8A shows that boat-shaped waffle 800 includes a plurality of pyramid-like shaped wells, such as pyramid-like shaped wells 804a. To explain the pyramid-like shape of the well, it is useful to imagine a three-dimensional pyramidal shell with its apex cut off. Further, boat-shaped waffle 800 includes a top edge 814 of a raised wall that forms the perimeter of boat-shaped waffle 800.

Pyramid-like shaped wells 804a are separated by ridges, such as ridges 806a. FIG. 8A illustrates section line B-B for viewing a cross section of boat-shaped waffle 800.

FIG. 8B is a cross-sectional view of the boat-shaped waffle taken in the direction B-B as shown in FIG. 8A, according to certain embodiments. FIG. 8B shows the plurality of pyramid-like shaped wells 804a, ridges 806a, and top edge 814. Further, FIG. 8B shows the cavity 825 that is suitable for holding ice-cream, or fruit, and/or other suitable waffle fillings or toppings. Other non-limiting examples of suitable waffle fillings or toppings include whipped cream, chocolate, assorted confection and any combination thereof. FIG. 8B also shows the plurality of pyramid-like shaped wells 804b, ridges 806b, which are on the flip side of boat-shaped waffle 800.

In the foregoing specification, embodiments of the invention have been described with reference to numerous specific details that may vary from implementation to implementation. The specification and drawings are, accordingly, to be regarded in an illustrative rather than a restrictive sense.

## Claims

1. A method for making a waffle appliance, the method comprising:
forming a first plate having at least one first boat-shaped cavity in said waffle appliance;
forming a second plate having at least one second boat-shaped cavity in said waffle appliance; and
wherein said at least one first and second boat-shaped cavities are adapted for cooking waffles in a boat shape suitable of holding waffle fillings and toppings.

2. The method of Claim 1, further comprising using a raised wall for forming said at least one first boat-shaped cavity, wherein said raised wall is of a height adapted for creating said waffles capable of holding waffle fillings and toppings.

3. The method of Claim 1, wherein said second plate is receivable by said first plate when said waffle appliance is in a closed position.

4. The method of Claim 1, wherein said at least one second boat-shaped cavity is substantially aligned with said at least one first boat-shaped cavity when said first plate is positioned over said second plate in a closed position.

5. The method of Claim 1, further comprising using a plurality of pyramidal protuberances within said at least one first and second boat-shaped cavities.

6. The method of Claim 1, further comprising adapting a top perimeter of said at least one first boat-shaped cavity to be greater than a bottom perimeter of said at least one first boat-shaped cavity.

7. The method of Claim 1, further comprising adapting a top perimeter of said at least one second boat-shaped cavity to be greater than a bottom perimeter of said at least one second boat-shaped cavity.

8. A cooking assembly for making waffles, the cooking assembly comprising:
a means for cooking a first portion of at least one boat-shaped waffle;
a means for cooking a second portion of said at least one boat-shaped waffle; and
wherein said first portion of said at least one boat-shaped waffle is suitable of holding waffle fillings and toppings.

9. The cooking assembly of Claim 8, further comprising means for allowing said means for cooking said first portion to be receivable by said means for cooking said second portion when said cooking assembly is in a closed position.

10. The cooking assembly of Claim 8, wherein said means for cooking said first portion is substantially aligned with said means for cooking said second portion when said means for cooking said first portion is positioned over said means for cooking said second portion in a closed position.

11. The cooking assembly of Claim 8, further comprising means for forming a plurality of pyramidal wells on a surface of said first portion of said at least one boat-shaped waffle.

12. The cooking assembly of Claim 8, further comprising means for forming a plurality of pyramidal wells on a surface of said second portion of said at least one boat-shaped waffle.

13. The cooking assembly of Claim 8, wherein said means for cooking said first portion has a top perimeter that is greater than a bottom perimeter of said means for cooking said first portion.

14. The cooking assembly of Claim 8, wherein said means for cooking said second portion has a top perimeter that is greater than a bottom perimeter of said means for cooking said second portion.

15. A cooking assembly for making waffles, the cooking assembly comprising:
a first plate having at least one first boat-shaped cavity;
a second plate having at least one second boat-shaped cavity;
wherein said at least one first and second boat-shaped cavities are adapted for cooking waffles in a boat shape and said at least one first boat-shaped cavity includes a raised wall wherein said raised wall is of a height adapted for creating said waffles suitable of holding waffle fillings and toppings; and
wherein said first and second plates have a non-stick finish and have a corresponding die-cast aluminum housing.

16. The cooking assembly of Claim 15, wherein said second plate is receivable by said first plate when said cooking assembly is in a closed position.

17. The cooking assembly of Claim 15, wherein said at least one second boat-shaped cavity is substantially aligned with said at least one first boat-shaped cavity when said first plate is positioned over said second plate in a closed position.

18. The cooking assembly of Claim 15, further comprising a plurality of pyramidal protuberances within said at least one first and second boat-shaped cavities.

19. The cooking assembly of Claim 15, wherein a top perimeter of said at least one first boat-shaped cavity is greater than a bottom perimeter of said at least one first boat-shaped cavity.

20. The cooking assembly of Claim 15, wherein a top perimeter of said at least one second boat-shaped cavity is greater than a bottom perimeter of said at least one second boat-shaped cavity.
